# EUROPEAN PATENT SPECIFICATION

(11) **EP 3 910 986 B1**
(45) Date of publication and mention of the grant of the patent: **17.01.2024**
(21) Application number: 20174637.7
(22) Date of filing: 14.05.2020
(51) Int. Cl.: H04W 24/02, H04W 64/00

(54) **METHOD OF DETECTING AN INTERFERENCE SOURCE IN AN INDUSTRIAL FACILITY**
VERFAHREN ZUR DETEKTION EINER STÖRQUELLE IN EINER INDUSTRIELLEN ANLAGE
PROCÉDÉ DE DÉTECTION D'UNE SOURCE D'INTERFÉRENCE DANS UNE INSTALLATION INDUSTRIELLE

(43) Date of publication of application: 17.11.2021
(73) Proprietor: Siemens Aktiengesellschaft, 80333 München (DE)
(72) Inventor: Fiorentino, Vincenzo, 90491 Nürnberg (DE); Richter, Siegfried, 91207 Lauf (DE)
(74) Representative: Siemens Patent Attorneys

(56) References cited:
- EP-A1- 3 557 899
- US-A1- 2012 129 517

## Description

### Background

The current invention relates to wireless communication in industrial automation environments and more specifically, to robust and secure wireless communication in industrial facilities.

With increasing implementation of industrial internet of things and other Industry 4.0 concepts in factories, plants and other industrial facilities, a plurality of assets in these facilities will be connected wirelessly. Several wireless networks and technologies such as cellular networks, local area networks, short range communication techniques such as Bluetooth, Near Field Communication, etc., may be utilized in enabling wireless communication. However, with increased utilization of wireless communication, penalty from wireless security threats, also increases considerably.

### Description

The current invention relates to security techniques for industrial wireless communication and more particularly to detection of jamming sources in industrial facilities.

A jamming source (also referred to as a malicious interference source) is a radio device that is capable generating interfering signals (also referred to as jamming signals) to disturb or block a radio communication within its radio range. Jamming signals can block the radio communication between a transmitter and a receiver by causing strong interference in the frequency band used by the transmitter and receiver.

A plurality of jamming techniques is used to create interference and disrupt wireless communications. Some of the common techniques include transmitting white noise or single tone jammer operating constantly on a fixed frequency, transmitting a jamming with a fixed or random pattern each time on different frequencies, transmitting a jamming signal simultaneously over multiple frequencies, etc. Certain jamming techniques are reactive and difficult to detect. For example, in an example a jammer may listen to a particular channel and determine the channel schedule. Based on the determined channel schedule, the jammer may transmit only during select times as per the channel schedule. In a further case, the jammer may receive the signal to be attacked and utilize the signal as the jamming signal by amplifying and re-transmitting the amplified signal to cause interference.

In the context of industrial environments, such jamming attacks can severely slow down or even block the entire production processes. Additionally, a jamming attack can have serious safety impact when equipment is used in collaborative operation with human personnel. Accordingly, there is a need for a method and device to address the issues mentioned above.

US 2012/129517 A1 discloses a network device receiving performance metric indicators from other network devices and analysing the performance across a geographic area to detect the location of a jamming device based on collection of further data from terminals in that area.

EP3557899 A1 discloses automated guide vehicles determining the own trajectories autonomously and measuring received signal strength or quality.

The present invention is according to the independent claims. Further embodiments of the invention are according to the dependent claims.

In one aspect the current disclosure describes a method of detecting an interference source in a wireless network in an industrial facility. The wireless network comprises a plurality of network devices. The method comprises receiving network quality information from the plurality of network devices, detecting a degradation in a section of the network based on the network quality information from one or more network devices from the plurality of the network devices, determining a geographical area associated with the section of the network based on the network quality information from the one or more network devices in the section of the network and determining a location of the interference source based on measurements of the one or more network KPIs from at least one mobile unit in the geographical area.

Network quality information from a corresponding network device includes one or more network KPIs indicative of signal quality at a corresponding network device, and a network identifier of the corresponding network device. The section of the network comprises the one or more network devices. In an example, the at least mobile unit is an automated guidance vehicle. In the example, the method further comprises determining a route plan for the automated guidance vehicle based on the determined geographical area and network topology of the section of the network. The automated guidance vehicle is configured to move along a route comprising a plurality of route locations in the geographical area based on the determined route plan and measure the one or more network KPIs at each location from the plurality of route locations.

Accordingly, the current invention addresses jamming attacks in industrial facility by locating the interference source. Additionally, based on the utilization of the mobile unit, the current invention is able to locate the interference source accurately. Subsequent to the localization of the interference source, various security actions may be taken to mitigate the interference source.

In an example, the plurality of network devices comprises one or more gateway devices affixed to a plurality of locations in the industrial facility, and one or more user devices connected to the wireless network via the one or more gateway devices. In an example, the one or more network KPIs include Residual Signal Strength Indicator (RSSI), Signal to Interference plus Noise Ratio (SINR) and Packet Error Rate (PER).

In an example, determining a geographical area associated with the first section of the network comprises determining a location of each network device from the one or more network devices based on network identifier of the corresponding network device and network topology of the wireless network; and determining the geographical area based on the one or more locations of the one or more network devices in the section of the network.

In an example, network quality information from each user device from the one or more user devices, further comprises location information indicative of a location of the corresponding user device.

In an example, the method further comprises coordinating with a radio localisation device comprising one or more sets of directional antennas fixed along a plurality of corresponding directions for determining the location of the interference source.

In another aspect, the current invention discloses a method of detecting a malicious interference source by an automated guidance vehicle in an industrial facility. The automated guidance vehicle is connected to a wireless network via a gateway device. The method comprises performing a first production task in a production mode, detecting a degradation in one or more of network KPIs associated with a connection between the automated guidance vehicle and the gateway device, switching from the production mode to an interference detection mode, based on the detected degradation in the one or more network KPIs, obtaining a route plan, wherein the route plan comprises a plurality of locations in the industrial facility, and measuring the one or more network KPIs at each location in the route plan, for transmitting measurements of the one or more network KPIs to a network management device associated with the wireless network. The first production task is generated by an automated guidance vehicle controller connected to the automated guidance vehicle via the wireless network. The measurements of one or more network KPIs from the plurality of locations in the route plan, is used by the network management device for detecting the location of the malicious interference source.

Accordingly, the current invention addresses a method for determining a location of the interference source using an existing automated guidance vehicle and therefore does not require human intervention. Additionally, dedicated hardware for performing this may not required as well.

In an example, measuring the one or more network KPIs at each location comprises measuring the one or more network KPIs using a radio antenna of the automated guidance vehicle in a first orientation and measuring the one or more KPIs using the radio antenna of the automated guidance vehicle in a second orientation. Based on measuring the network KPIs in two orientations, the localization of the interference source is improved.

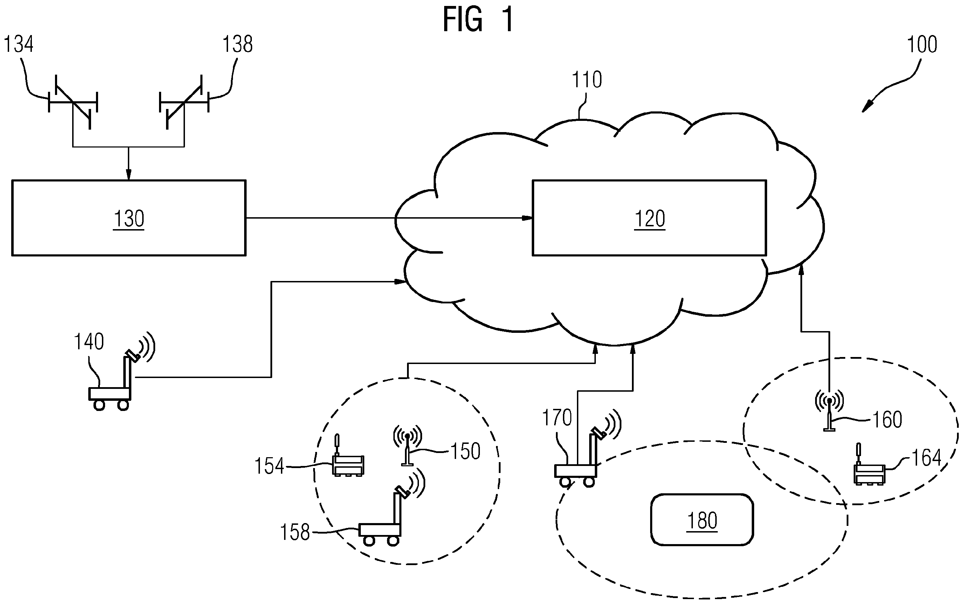

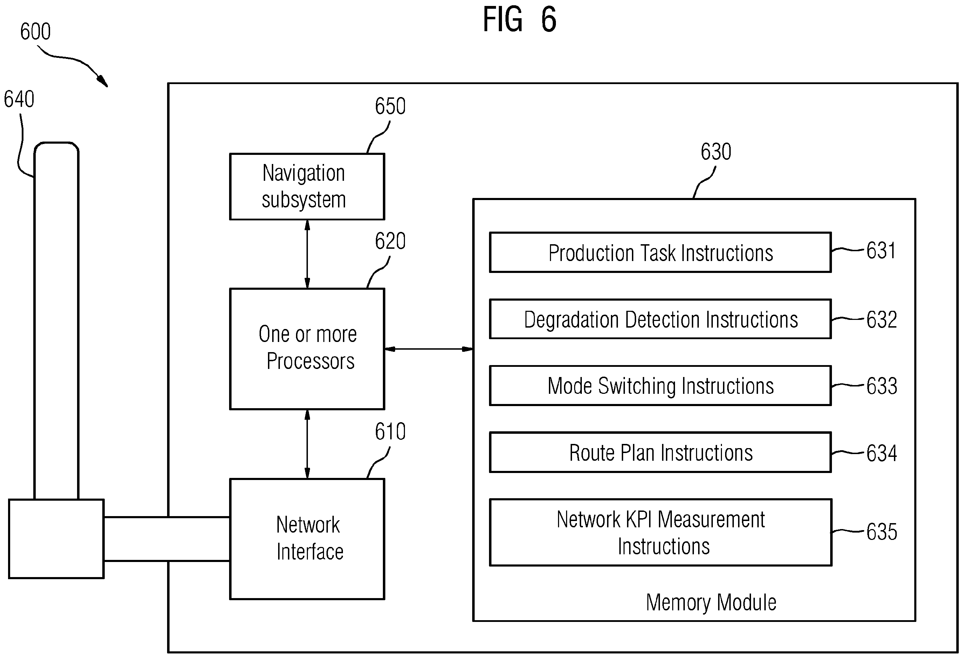

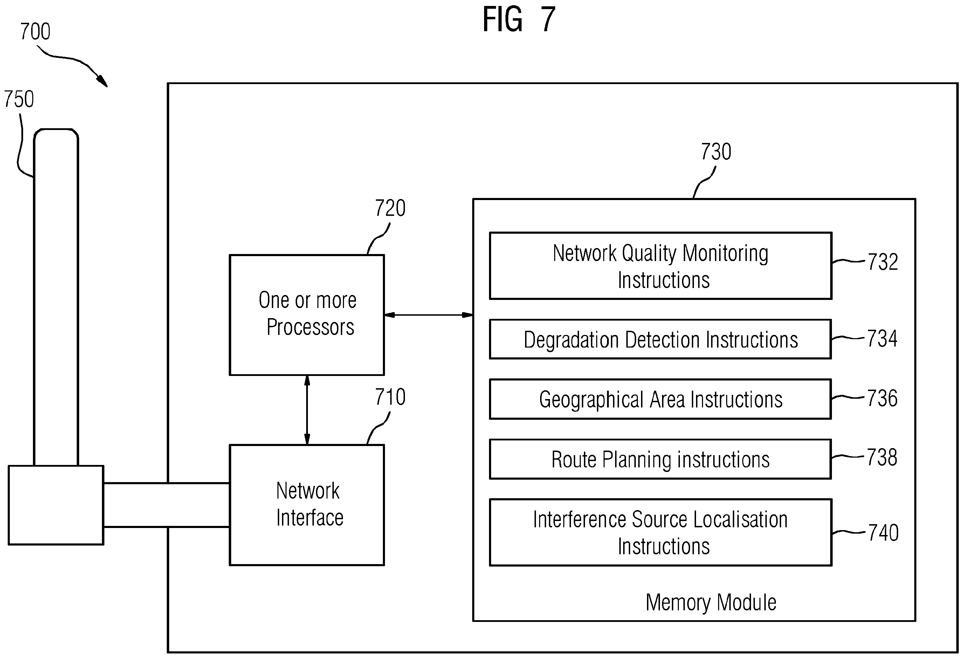

In an example, switching from the production mode to an interference detection mode comprises evaluating a degree of the degradation in the connection between the automated guidance vehicle and the gateway device. Accordingly, based on the degree of degradation, it can be determined if the automated guidance vehicle can perform the first production task while experiencing the degradation. In an example, the detected degradation is caused by one or more jamming signals from the interference source. These aspects are further described in relation figures 1-7.

The following detailed description references the drawings, wherein:
Figure 1 illustrates an example section of an example industrial facility comprising a network management device capable of detecting a jamming source in the industrial facility;
Figure 2 illustrates an example method for determining an interference source in the wireless network in the industrial facility;
Figure 3 illustrates an example method of determining an interference source by an automated guidance vehicle in an industrial facility;
Figure 4 illustrates example trends of two example performance KPIs data latency and data rate associated with an example network device;
Figure 5 illustrates an example route plan for the automated guidance vehicle for determining the interference source;
Figure 6 is a block diagram of an example automated guidance vehicle for determining an interference source in the wireless network in the industrial facility; and
Figure 7 is a block diagram of an example network management device for determining an interference source in the wireless network in the industrial facility.

Figure 1 illustrates a section 100 of an industrial wireless network in an industrial facility. Industrial facility herein refers to any environment where one or more industrial processes such as manufacturing, refining, smelting, assembly of equipment may take place and includes process plants, oil refineries, automobile factories, etc. The industrial system includes a plurality of control devices such as process controllers, programmable logic controllers, supervisory controllers, automated guidance vehicles, robots, operator devices, etc. One or more control devices are connected to a plurality of field devices (not shown in figure) such as actuators and sensor devices for monitoring and controlling industrial processes in the industrial facility. These field devices can include flowmeters, value actuators, temperature sensors, pressure sensors, etc. The control devices may be connected to each other via a control network (realized via wired and wireless networks). Additionally, the industrial system includes a plurality of mobile units including one or more robots for performing a plurality of operations such as welding, assembly of parts; one or more autonomous guidance vehicles for transportation and handling of material, one or more assets with RFID tags on conveyor belts, etc., in the industrial plant. Additionally, the industrial system may include an operator station for displaying the status of the industrial plant to an operator and for allowing the operator to define KPIs for the control of the industrial processes in the facility.

Communication in the industrial facility happens through wired and wireless networks. A section 100 of such a wireless network is illustrated in figure 1. The wireless network comprises a plurality of network devices (140, 154, 150, 158, 170, 160, 164). The plurality of network devices (140, 154, 150, 158, 170, 160, 164) includes a plurality of control devices (154, 158, 170, 164) and a plurality of industrial gateway devices (150, 160; also referred to as gateway devices). Gateway devices herein refers to one or more network devices capable of connecting other network devices such as end devices to the wireless network. Examples of gateway devices include routers, switches, relays, etc.

The plurality of gateway devices are affixed to a plurality of locations in the industrial facility. The plurality of the control devices (154, 158, 170, 164) in the facility are connected to one or more industrial gateway devices (154, 158, 170, 164) for connecting to the wireless network and for communicating information with the other devices and systems in the industrial facility.

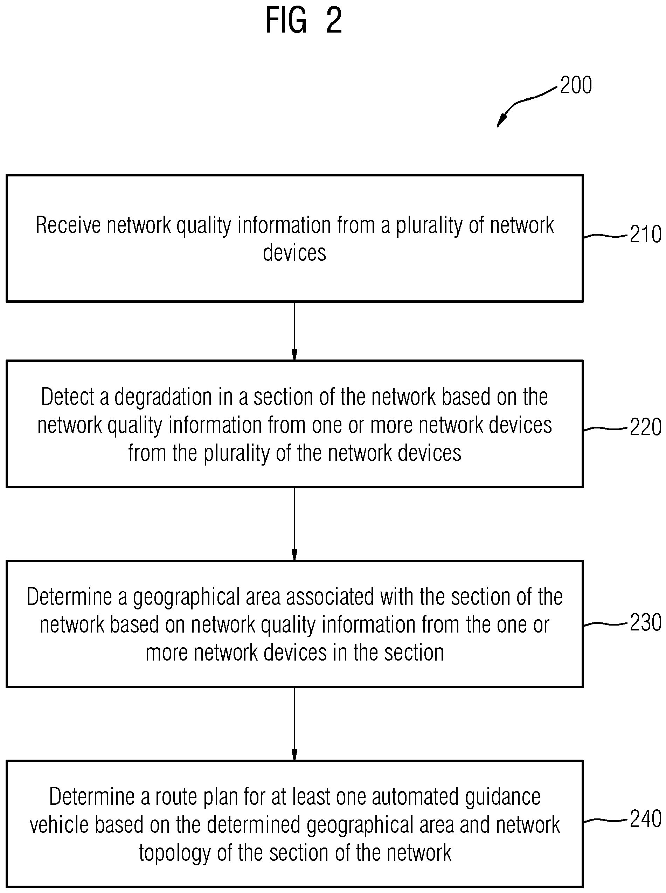

The wireless network further comprises a network management device 120 for managing the wireless network. The network management device 120 is configured to detect jamming or interference sources (including unintentional and malicious interference sources) and take one or more actions to mitigate interference in the wireless network. The network management device 120 can connect to the mobile units such as the one or more automated guidance vehicles (140, 158, 170) for determining the location of the interference sources. Similarly, the network management device 120 is connecting to a radio localisation device 130 for determining the location of the interference sources. This is explained in description of figure 2.

It may be noted by a person skilled in the art, that the interference source may be located within the industrial facility or outside the physical premises of the industrial facility. While the interference source may be physically present outside the industrial facility, the jamming signals may be able to impact the wireless network within the industrial facility.

Figure 2 illustrates a method 200 of detecting an interference source 180 in the wireless network in the industrial facility. The method 200 is realized by the network management device 120.

At step 210, the network management device 120 receives network quality information from the plurality of network devices (150, 154, 158, 160, 164, 168, 170, 174). Network quality information from a corresponding network device includes one or more network key performance indices (KPIs, also referred to as network KPIs) indicative of signal quality at a corresponding network device, and a network identifier of the corresponding network device. Network identifier herein refers to any identifier used to identify the network device. Examples of network identifiers include Internet Protocol (IP) address, Media Access Control (MAC) address, International Mobile Subscriber Identity (IMSI), Mobile Station International ISDN Number, or other defined according to the technology used, etc. Example of network KPIs which are indicative of signal quality, include Residual Signal Strength Indicator (RSSI), Signal to interference plus noise ratio (SINR), Packet Error Rate (PER), data latency, data rate and modulation scheme used by the corresponding network device.

In an example, the one or more network KPIs are grouped into three categories: 1) performance KPIs, 2) radio KPIs and 3) system parameters. Performance KPIs herein refers to one or more network KPIs associated with network performance. Examples of performance KPIs include latency, data rate, etc. Radio KPIs herein refers to KPIs indicative of in-band interference level. Examples of radio KPIs include Residual Signal Strength Indicator (RSSI), Signal to interference plus noise ratio (SINR), Packet Error Rate (PER). System parameters herein refers to parameters indicative of network and radio configuration of the corresponding network device from which the network quality information is transmitted. Examples of system parameters includes modulation scheme used by the corresponding device, etc.

In the step 220, the network management device 120 detects a degradation in a section of the wireless network based on the network quality information from one or more network devices (170, 160, 164) from the plurality of network devices (150, 154, 158, 160, 164, 168, 170, 174). For detecting the degradation in the section of the wireless network, the network management device 120 analyses the values of the network KPIs from each of the network device from the plurality of network devices.

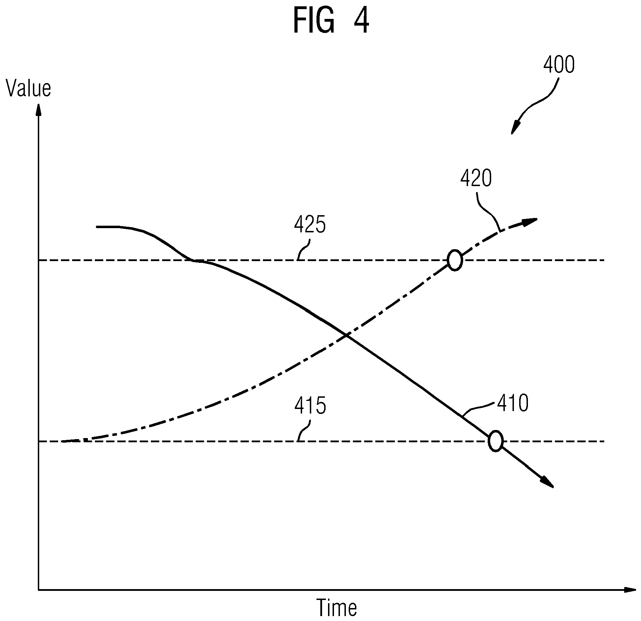

In an example, if the values of the network KPIs are outside of a certain predefined threshold range, the network management device 120 determines that the corresponding network device is experiencing network degradation. The threshold range may be determined based on historic values. In an example, the network management device utilizes the three categories of network KPIs to determine if a network device is experiencing a network degradation. This is further illustrated using an example shown in figure 4 with performance KPIs category.

Figure 4 illustrates trends of two performance KPIs data latency and data rate associated with a network device. Data latency is represented using curve 420 and Data rate is represented using curve 410. Line 425 represents an upper limit for data latency. Similarly, line 415 represents a lower limit for data rate. If, data latency is above the defined threshold vale (as shown in line 425) or if the data rate is below the threshold value (as shown in line 415), the network management device 120 detects that the corresponding network device is experiencing network degradation. Similarly, network KPIs and system parameters are also used for determining if a network device is experiencing network degradation. As it may be known to be person skilled in the art, the degradation in the network may be detected based on a grouping on one or more network KPIs from the above described performance, system and radio KPIs. For example, a degradation may be detected based on an increase in RSSI, a decrease to signal to interference and noise ration (SINR) and an increase in packet error rate (PER) above their predefined thresholds.

Subsequent to determining all the network devices which are experiencing network degradation, then based on network topology, the network management device 120 can determine if one or more devices are within a predetermined proximity to each other in geographical or network terms. Network topology herein refers to a physical layout comprising location information of the network devices installed in the industrial facility along with the physical and logical interconnections amongst the network devices. For example, two network devices are considered to be proximate to one another when they are connected to each other or are connected to the same gateway device. In another example, two network devices are considered to be proximate to one another when they are with a predefined distance of each other's geographical location in the industrial facility. Then, based on the proximate network devices experiencing network degradation, the network management device detects the section of the network experiencing degradation. The section of the network comprises the proximate network devices experiencing network degradation. This is explained further using examples below.

In an example, the network management device 120 determines that network device 154 and automated guidance vehicle 158 are experiencing network degradation based on the network quality information from the network device 154 and automated guidance vehicle 158. From the network topology, the network management device 120 can determine the network device 154 and automated guidance vehicle 158 are connected to the same gateway device 150. Accordingly, the network management device 120 determines a section of the network having degradation, the section comprising the network device 154 and automated guidance vehicle 158.

In an example, the network management device 120 is configured to determine if the detected degradation in the section of the network is caused by a known interference source or an unknown interference source (including the malicious interference source 180). In an example, prior to the commissioning of the wireless network, a drive test for measurement of background radio interference is conducted. The drive test determines the degree to which the radio spectrum within the industrial facility is clean from interference. Subsequent to the drive test, pre-existing interference sources within the industrial facility are identified

Accordingly, the network management device 120 includes a list of known interference sources along with geographical information indicative of the range of the interference. In an example, the list of interference sources includes one or more interference sources associated with operation of industrial assets such as welding machines, motors, other radio sources, etc. If the degradation in the section of the network is due to a known interference source, the network management device 120 terminates the method 200. If the degradation is not due to an interference source from the list of interference sources, the interference source is deemed as a malicious or unknown interference source and the network management device 120 continues to step 230.

Then at step 230, the network management device 120 determines a geographical area associated with the section of the network based on the network quality information from the one or more network devices (170, 160, 164) in the section of the network. The geographical area serves as the target area within which the interference source is assumed to be operating.

For determining the geographical area, the network management device 120 determines the locations of the one or more network devices in the section of the network. In an example, wherein the network device is a gateway device, the network management device 120 can determine a location of the gateway device based on the network topology associated with the wireless network. Using the network device identifier, the network management device 120 can determine the location of the corresponding network device from the network topology. In another example, wherein the network device is a mobile device, the location of the corresponding mobile device may be determined from the location information sent as a part of the network quality information by the corresponding mobile device. In yet another example, wherein the network device is a mobile device incapable of sending its location information, the network management device 120 can determine the location of the mobile device by triangulation using one or more network devices within the radio communication range of the mobile device or by any other positioning technique. In an additional example, a locationing system may also be used.

Then, based on the locations of the network devices in the section of the network, the network management device determines the geographical area. In an example, the network management device determines the geographical area of a predetermined size comprising all the locations of the one or more network devices. In an example, the geographical area is determined based on the locations of the network devices and the radio range of the network devices. In an example, antenna characteristics and antenna orientation of the network device may be used for further used to determine the geographical area.

Then at step 240, the network management device determines a location of the interference source 180 based on measurements of the one or more network KPIs from at least one mobile unit in the geographical area. Continuing from step 230, once the network management device 120 has determined the geographical area within which the interference source is present, the network management device 120 relies on one or more network devices which are mobile (also referred to as mobile units) to take a plurality of measurements in the geographical area to localize the interference source. Mobile units are capable of determining their position and are able to determine the direction and orientation of the antenna during measurements of network KPIs. The mobile units are equipped with 2D or 3D radio antenna phased arrays.

In order to do so, the network management device 120 determines the one or more mobile units in coordination with a control system associated with the industrial facility. Then, the network management device 120 requests the one or more mobile units to transmit measurements of the network KPIs as they traverse the determined geographical area. The network management device 120 provides each mobile unit with a route plan comprising a plurality of locations within the determined geographical area for measurements. In an example, where there is substantial interference within the determined geographical area, the mobile units are configured to take the measurements within the determined geographical area and come out of the determined geographical area. Subsequent to coming out of the geographical area, the mobile units connect to the nearest gateway device to transmit the measurements to the network management device 120.

Then, based on the measurements, the network management device 120 is able to determine the area or location of the interference source in the industrial facility. In an example, based on the antenna direction and orientation information from the mobile units, the network management device 120 is able to localize the interference sources. In another example, the network management device 120 triggers a positioning service available in the wireless network for localizing the interference source. For example, this could be performed using a radio localization device 130 which can use a plurality of techniques for localizing the interference source. The radio localization device 130 provides information about the interference source, based on power and angle of arrival, to the network management device 120. The network management device 120 utilizes the information from the radio localization device 130 together with the measurements from the mobile units to determine the location of the interference source.

In an example, the network management device is further configured to coordinate with a radio localisation device 130 for determining the geographical area and for localizing the interference source. The radio localisation device is a diagnostic device comprising one or more sets of directional antennas fixed along a plurality of corresponding directions. The radio localisation device is capable of performing RF spectrum analysis to determine the shape and the spread of the interference source. This information is then forwarded to the network management device 120 and is used in the determination of the interference source.

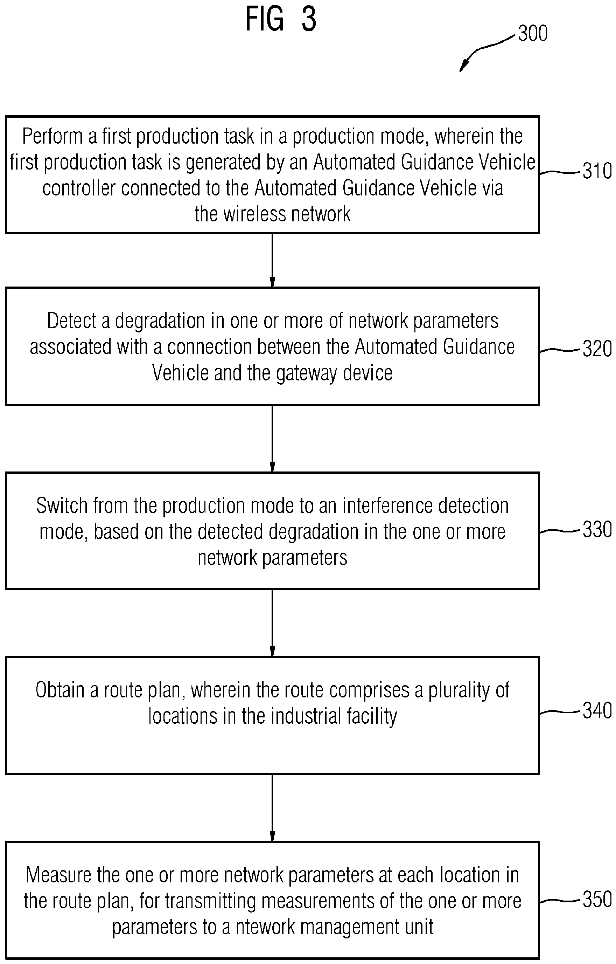

In an example, the one or more mobile units includes an automated guidance vehicle 158 which coordinates with the network management device 120 to detect the position of the interference source. This is explained further in reference to figure 3.

Figure 3 illustrates a method 300 of detecting the interference source 180 by the automated guidance vehicle 158 in an industrial facility. The method 300 is performed by the automated guidance vehicle 158 in coordination with the network management device 120. At step 310, the automated guidance vehicle 158 performs a first production task in a production mode. The first production task is generated by an automated guidance vehicle controller connected to the automated guidance vehicle 158 via the wireless network. The automated guidance vehicle controller is connected to the control system of the industrial facility for controlling a plurality of automated guidance vehicles.

The first production task is an industrial task performed by the automated guidance vehicle 150. The first production task may be an industrial task performed by the automated guidance vehicle 150, in relation to various aspects within the industrial facility, such as maintenance, production, logistics, etc. For example, the first production task includes a transportation task wherein the automated guidance vehicle is responsible for carrying raw materials from a first station to a second station. The automated guidance vehicle is equipped with a plurality of sensors for performing the first production task. For example, the automated guidance vehicle is equipped with navigation sub system and one or more RFID readers to assist in guiding the automated guidance vehicle. The first production task may also be an idle task where no actual tasks have been assigned to the automated guidance vehicle and the controller has set the automated guidance vehicle to an idle state.

Then, at step 320, the automated guidance vehicle 158 detects a degradation in one or more of network KPIs associated with a connection between the automated guidance vehicle and the gateway device. In an example, the automated guidance vehicle in coordination with the network management device 120, the automated guidance vehicle 158 detects a degradation in one of more of the network KPIs when the values of the network KPIs is outside of a certain predefined range or if the rate of change in the value of the network KPI is above a certain predefined threshold. The detected degradation is caused by one or more jamming signals from the interference source.

Then, at step 330, based on the detected degradation, the automated guidance vehicle 158 switches from the production mode to an interference detection mode. In an example, the network management device 120 instructs the automated guidance vehicle 158 to switch from the production mode to an interference detection mode, after evaluating a degree of the degradation in the connection between the automated guidance vehicle and the gateway device. In the example, the first production task includes a task priority which is determined by the automated guidance vehicle controller while assigning the first production task to the automated guidance vehicle 158. Based on the degree to which a network KPI is outside of the predefined range and the task priority, the network management device 120 decides if the automated guidance vehicle has to switch from the production mode to the interference detection mode.

In another example, the network degradation is not severe enough to affect the current production task. In such a case, the network management device 120 decides not to switch the automated guidance vehicle from the production mode to the interference detection mode. For example, the data rate and the data latency are no longer in the predefined range, however the current production task has high priority and does not require coordination with any other network device. In such a case, the network management device 120 may not switch the automated guidance vehicle from the production mode to the interference detection mode.

Then, at step 340, the automated guidance vehicle 158 obtains a route plan. The route plan comprises a plurality of locations in the industrial facility.

In an example, the route plan is determined and transmitted to the automated guidance vehicle by the network management device 120. In the example, the network management device 120 determines the route plan for the automated guidance vehicle 158 based on network topology of the section of the network and the received network quality information from the plurality of network devices.

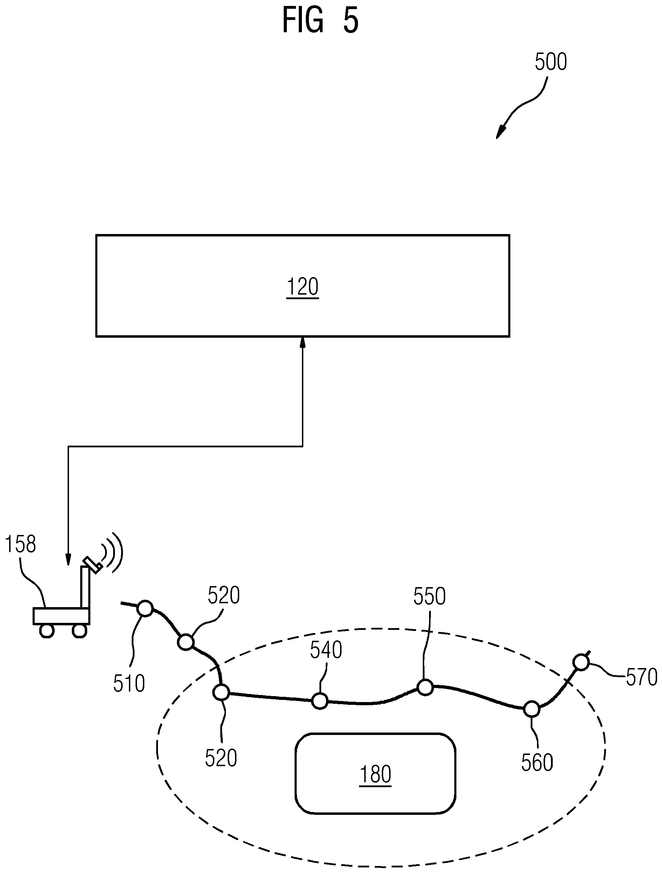

More particularly, the network management device 120 determines the route plan for optimally covering the determined geographical area as previously mentioned in method 200. As mentioned in step 230 of the method 200, the network management device 120 determines the geographical area within which the interference source may be operating based on the one or more network information from the network devices in the section of the network experiencing degradation in the network. Then, the network management device determines a plurality of locations for optimally covering the geographical area. An example route plan is illustrated in figure 5. The route plan comprises of locations 510, 520, 530, 540, 550, 560 and 570. The automated guidance vehicle 158 goes to each location in the route plan and measures the network KPIs and transmits the measurements to the network management device 120.

Then, at step 350, the automated guidance vehicle 158 measures the one or more network KPIs at each location in the route plan, for transmitting measurements of the one or more network KPIs to a network management device associated with the wireless network. Accordingly, the automated guidance vehicle then transmits the measurements of the one or more network KPIs from each location in the route plan to the network management device. The measurements of one or more network KPIs from the plurality of locations in the route plan, is then used by the network management device for detecting a location of the malicious interference source using the techniques mentioned above.

In an example, the automated guidance vehicle is equipped with non-omni directional antennas. Accordingly, the automated guidance vehicle takes a couple of measurements at each location using its radio antenna, a first measurement in a first orientation and a second measurement in second orientation. For example, the automated guidance vehicle may be equipped with a rotatable antenna using which it can take the first and second measurements in the first and second orientations. In another example, the automated guidance vehicle is equipped with a fixed antenna and is capable of moving itself into the first and second orientation to take the first and second measurements. Based on the first measurement and the second measurement taken in the same location, the network management device 120 can determine the position of the interference source more accurately. In an example, the multiple measurements are taken such that such that the measurements are should be executed over 360 degrees to identify the source of interference. In an example, the automated guidance vehicle is equipped with one or more cameras and is capable of taking pictures or videos of the locations in the route plan while taking the measurements of the network KPIs. In an example, the orientation of the camera is determined based on the orientation of the radio antenna during the measurements. This is to ensure that the camera is directed in the same direction as the antenna performing the measurements. In an example, where the automated guidance vehicle includes a fixed camera, the automated guidance vehicle is configured to rotate itself to the orientation of the antenna to capture images with the fixed camera.

In an example, field strength of the jamming signal is overlaid with the images or videos to analyze and determine the location of the malicious interference source.

It is to be noted by a person skilled in the art, that while the above methods are explained using one automated guidance vehicle, a plurality of automated guidance vehicles may also be used in a similar fashion. Additionally, the above-mentioned methods may also be realized by one or more dedicated diagnostic automated guidance vehicles which are only capable of working in the interference detection mode.

The present disclosure can take a form of a computer program product comprising program modules accessible from computer-usable or computer-readable medium storing program code for use by or in connection with one or more computers, processing units, or instruction execution system. For example, the functions of the network management device 120 or the automated guidance vehicle 150 may be realized across one or more devices. Additionally, the network management device 120 may be realized as a module of the control system.

Accordingly, the current disclosure as describes an automated guidance vehicle 600 for detecting an interference source. The automated guidance vehicle 600 includes a network interface 610, one or more processors 620 and a non-transitory storage medium 630. The network interface 610 (including an example antenna 640) is configured to connect to an automated guidance vehicle controller and the network management device via the gateway device 150. The non-transitory storage medium 630 contains a plurality of instructions (631, 632, 633, 634 and 635) which when executed by the processors 620 cause the processors 620 to detect the interference source. This is further explained below.

At the execution of the production task instructions 631, the one or more processors 620 perform a first production task in a production mode, wherein the first production task is generated by an automated guidance vehicle controller connected to the automated guidance vehicle via the wireless network. At the execution of the degradation detection instructions 632, the one or more processors 620 (along with the network management device 120) detect a degradation in one or more of network KPIs associated with a connection between the automated guidance vehicle and a gateway device 150. At the execution of the mode switching instructions 633, the one or more processors 620 switch from the production mode to an interference detection mode, based on the detected degradation in the one or more network KPIs. At the execution of the route plan instructions 634, the one or more processors 620 obtain a route plan, wherein the route plan comprises a plurality of locations in the industrial facility. At the execution of the network KPI measurement instructions 635, the one or more processors 620 measure the one or more network KPIs at each location in the route plan, for transmitting measurements of the one or more network KPIs to a network management device 120 associated with the wireless network. To enable the movement of the automated guidance vehicle 600, the processors 620 are connected to a navigation subsystem 650 for navigating itself around the industrial facility. The navigation subsystem 650 is configured to determine the position and the driving orientation of the automated guidance vehicle 600. In an example, the navigation subsystem 650 is capable of working autonomously when the communication with the wireless network is interrupted. The measurements of one or more network KPIs from the plurality of locations in the route plan, is used by the network management device 120 for detecting a location of the interference source 180.

Similarly, the current invention discloses a network management device 700 for detecting an interference source. The network management device 700 includes a network interface 710, one or more processors 720 and a non-transitory storage medium 730. The network interface 710 (including an example antenna 750) is configured to connect to the network devices of the wireless network. The non-transitory storage medium 630 contains a plurality of instructions (732, 734, 736, 738 and 740) which when executed by the processors 720 cause the processors 720 to detect the interference source. This is further explained below.

At the execution of the network quality monitoring instructions 732, the one or more processors 720 receive network quality information from a plurality of network devices (140, 150, 154, 158, 160, 164, 170), wherein network quality information from a corresponding network device includes one or more network KPIs indicative of signal quality at a corresponding network device, and a network identifier of the corresponding network device. Then, at the execution of the degradation detection instructions 734, the processors 720 detect a degradation in a section of the network based on the network quality information from one or more network devices (160, 164, 170) from the plurality of the network devices (140, 150, 154, 158, 160, 164, 170), wherein the section of the network comprises the one or more network devices (160, 164, 170). Then at the execution of the geographical area instructions 736, the processors 720 determine a geographical area associated with the section of the network based on the network quality information from the one or more network devices (160, 164, 170) in the section of the network. Then, at the execution of the interference source localization instructions 740, the processors 720 determine a location of the malicious interference source (180) based on measurements of the one or more network KPIs from at least one mobile unit (170) in the geographical area.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the current disclosure is described with references to few industrial devices, a plurality of industrial devices may be utilized in the context of the current disclosure. While the present disclosure has been described in detail with reference to certain embodiments, it should be appreciated that the present disclosure is not limited to those embodiments. In view of the present disclosure, many modifications and variations would be present themselves, to those skilled in the art. The scope of the present disclosure is, therefore, indicated by the following claims rather than by the foregoing description.

## Claims

1. A method (200) for detecting an interference source (180) in a wireless network in an industrial facility, wherein the wireless network comprises a plurality of network devices (140, 150, 154, 158, 160, 164, 170), the method (200), performed by a network management device (120) comprising:
a. receiving network quality information from a plurality of network devices (140, 150, 154, 158, 160, 164, 170), wherein network quality information from a corresponding network device includes one or more network KPIs indicative of signal quality at the corresponding network device, and a network identifier of the corresponding network device;
b. detecting a degradation in a section of the network based on the network quality information from one or more network devices (160, 164, 170) from the plurality of the network devices (140, 150, 154, 158, 160, 164, 170), wherein the section of the network comprises the one or more network devices (160, 164, 170);
c. determining a geographical area associated with the section of the network based on the network quality information from the one or more network devices (160, 164, 170) in the section of the network;
d. determining a route plan to be provided to an automated guidance vehicle (158) based on the determined geographical area and network topology of the section of the network for covering the geographical area, wherein determining the route plan comprises determining a plurality of locations in the geographical area for covering the geographical area; and
e. determining (240) a location of the interference source (180) based on measurements of the one or more network KPIs measured at the plurality of locations in the geographical area, from the automated guidance vehicle (158);
wherein the route plan for the automated guidance vehicle (158) comprises the plurality of locations in the geographical area to which the automated guidance vehicle (!58) is to be going and wherein at each location from the plurality of locations, the one or more network KPIs are to be measured using the automated guidance vehicle (158).

2. The method as claimed in claim 1, wherein the plurality of network devices (150, 154, 158, 160, 164, 168, 170, 174) comprises one or more network gateway devices affixed to a plurality of locations in the industrial facility, and one or more user devices connected to the wireless network via the one or more network gateway devices.

3. The method as claimed in claim 1, wherein the one or more network KPIs include Residual Signal Strength Indicator (RSSI), Signal to Interference plus Noise Ratio (SINR) and Packet Error Rate (PER).

4. The method as claimed in claim 1, wherein determining a geographical area associated with the first section of the network comprises
a. determining a location of a network device from the one or more network devices based on network identifier of the corresponding network device and network topology of the wireless network; and
b. determining the geographical area based on the one or more locations of the one or more network devices in the first section of the network.

5. The method as claimed in claim 2, wherein network quality information from each user device from the one or more user devices, further comprises location information indicative of a location of the corresponding user device.

6. The method as claimed in claim 1, wherein the method further comprises coordinating with a radio localisation module (130) comprising one or more sets of directional antennas (134, 138) fixed along a plurality of corresponding directions.

7. A method of measuring one or more network KPIs for detecting an interference source (180) performed by an automated guidance vehicle (158) in an industrial facility, wherein the automated guidance vehicle (158) is connected to a wireless network via a gateway device (150), the method comprising:
a. performing a first production task in a production mode, wherein the first production task is generated by an automated guidance vehicle controller connected to the automated guidance vehicle via the wireless network;
b. detecting a degradation in one or more of network KPIs associated with a connection between the automated guidance vehicle and the gateway device;
c. switching from the production mode to an interference detection mode, based on the detected degradation in the one or more network KPIs;
d. obtaining a route plan from a network management device, wherein the route plan comprises a plurality of locations in the industrial facility; and
e. measuring the one or more network KPIs at each location in the route plan by going to each location, for transmitting measurements of the one or more network KPIs to said network management device associated with the wireless network;
wherein the plurality of locations of the route plan are in a geographical area associated with a section of the network comprising one or more network devices (160, 164, 170), and wherein the detected degradation is caused by one or more jamming signals from the interference source in the geographical area.

8. The method as claimed in claim 7, wherein measuring the one or more network KPIs at each location comprises measuring the one or more network KPIs using a radio antenna of the automated guidance vehicle in a first orientation and measuring the one or more KPIs using the radio antenna of the automated guidance vehicle in a second orientation.

9. The method as claimed in claim 7, wherein switching from the production mode to an interference detection mode comprises evaluating a degree of the degradation in the connection between the automated guidance vehicle and the gateway device.

10. The method as claimed in claim 9, wherein the detected degradation is caused by one or more jamming signals from the interference source.

11. A network management device (120) for detecting an interference source (180) in a wireless network in an industrial facility, wherein the wireless network comprises a plurality of network devices (140, 150, 154, 158, 160, 164, 170), the network management device (120) comprising:
a. one or more network interfaces (710) for communicating with one or more network devices in the wireless network,
b. one or more processors (720) connected to a memory module (730), the one or more processors configured to:
i. receive network quality information from a plurality of network devices (140, 150, 154, 158, 160, 164, 170), wherein network quality information from a corresponding network device includes one or more network KPIs indicative of signal quality at the corresponding network device, and a network identifier of the corresponding network device;
ii. detect a degradation in a section of the network based on the network quality information from one or more network devices (160, 164, 170) from the plurality of the network devices (140, 150, 154, 158, 160, 164, 170), wherein the section of the network comprises the one or more network devices (160, 164, 170);
iii. determine a geographical area associated with the section of the network based on the network quality information from the one or more network devices (160, 164, 170) in the section of the network;
iv. determine a route plan for an automated guidance vehicle (158) based on the determined geographical area and network topology of the section of the network for covering the geographical area, wherein determining the route plan comprises determining a plurality of locations in the geographical area for covering the geographical area; and
v. determine a location of the interference source (180) based on measurements of the one or more network KPIs in the geographical area, from the automated guidance vehicle (158);
wherein the route plan for the automated guidance vehicle (158) comprises the plurality of locations in the geographical area to which the automated guidance vehicle (158) is to go to and
wherein at each location from the plurality of locations, the one or more network KPIs are to be measured using the automated guidance vehicle (158).

## Patentansprüche

1. Verfahren (200) zur Detektion einer Störquelle (180) in einem Drahtlosnetzwerk in einer industriellen Anlage, wobei das Drahtlosnetzwerk eine Vielzahl von Netzwerkgeräten (140, 150, 154, 158, 160, 164, 170) umfasst, wobei das Verfahren (200), das von einem Netzwerkmanagementgerät (120) durchgeführt wird, umfasst:
a. Empfangen von Netzwerkqualitätsinformationen von einer Vielzahl von Netzwerkgeräten (140, 150, 154, 158, 160, 164, 170), wobei Netzwerkqualitätsinformationen von einem entsprechenden Netzwerkgerät einen oder mehrere Netzwerk-KPIs aufweisen, die die Signalqualität in dem entsprechenden Netzwerkgerät und eine Netzwerkkennung des entsprechenden Netzwerkgeräts angeben;
b. Detektieren einer Verschlechterung in einem Abschnitt des Netzwerks basierend auf den Netzwerkqualitätsinformationen von einem oder mehreren Netzwerkgeräten (160, 164, 170) aus der Vielzahl der Netzwerkgeräten (140, 150, 154, 158, 160, 164, 170), wobei der Abschnitt des Netzwerks das eine oder die mehreren Netzwerkgeräte (160, 164, 170) umfasst;
c. Bestimmen eines geografischen Gebiets, das dem Abschnitt des Netzwerks zugeordnet ist, basierend auf den Netzwerkqualitätsinformationen von dem einen oder den mehreren Netzwerkgeräten (160, 164, 170) in dem Abschnitt des Netzwerks;
d. Bestimmen eines Routenplans, der einem automatisierten Führungsfahrzeug (158) bereitgestellt werden soll, basierend auf dem bestimmten geografischen Gebiet und der Netzwerktopologie des Abschnitts des Netzwerks zur Abdeckung des geografischen Gebiets, wobei das Bestimmen des Routenplans ein Bestimmen einer Vielzahl von Orten in dem geografischen Gebiet zur Abdeckung des geografischen Gebiets umfasst; und
e. Bestimmen (240) eines Orts der Störquelle (180) basierend auf Messungen des einen oder der mehreren Netzwerk-KPIs, die an der Vielzahl von Orten in dem geografischen Gebiet von dem automatisierten Führungsfahrzeug (158) gemessen wurden;
wobei der Routenplan für das automatisierte Führungsfahrzeug (158) die Vielzahl von Orten in dem geografischen Gebiet umfasst, zu dem das automatisierte Führungsfahrzeug (158) fahren soll, und wobei an jedem Ort aus der Vielzahl von Orten der eine oder die mehreren Netzwerk-KPIs unter Verwendung des automatisierten Führungsfahrzeugs (158) zu messen sind.

2. Verfahren nach Anspruch 1, wobei die Vielzahl von Netzwerkgeräten (150, 154, 158, 160, 164, 168, 170, 174) eines oder mehrere Netzwerk-Gateway-Geräte, die an einer Vielzahl von Orten in der industriellen Anlage angebracht sind, und eines oder mehrere Benutzergeräte, die über das eine oder die mehreren Netzwerk-Gateway-Geräte mit dem Drahtlosnetzwerk verbunden sind, umfassen.

3. Verfahren nach Anspruch 1, wobei der eine oder die mehreren Netzwerk-KPIs einen Signalempfangsstärkeindikator (Received Signal Strength Indicator) (RSSI), ein Signal-zu-Interferenzplus-Rauschen-Verhältnis (Signal to Interference plus Noise Ratio) (SINR) und eine Paketfehlerrate (Packet Error Rate) (PER) aufweisen.

4. Verfahren nach Anspruch 1, wobei das Bestimmen eines geografischen Gebiets, das dem ersten Abschnitt des Netzwerks zugeordnet ist, umfasst
a. Bestimmen eines Orts eines Netzwerkgeräts aus dem einen oder den mehreren Netzwerkgeräten basierend auf der Netzwerkkennung des entsprechenden Netzwerkgeräts und der Netzwerktopologie des Drahtlosnetzwerks; und
b. Bestimmen des geografischen Gebiets basierend auf dem einen oder den mehreren Orten des einen oder der mehreren Netzwerkgeräte in dem ersten Abschnitt des Netzwerks.

5. Verfahren nach Anspruch 2, wobei Netzwerkqualitätsinformationen von jedem Benutzergerät von dem einen oder den mehreren Benutzergeräten ferner Ortinformationen umfassen, die einen Ort des entsprechenden Benutzergeräts angeben.

6. Verfahren nach Anspruch 1, wobei das Verfahren ferner eine Koordination mit einem Funklokalisierungsmodul (130) umfasst, das einen oder mehrere Sätze von Richtantennen (134, 138) umfasst, die entlang einer Vielzahl entsprechender Richtungen befestigt sind.

7. Verfahren zum Messen eines oder mehrerer Netzwerk-KPIs zur Detektion einer Störquelle (180), das von einem automatisierten Führungsfahrzeug (158) in einer Industriellen Anlage durchgeführt wird, wobei das automatisierte Führungsfahrzeug (158) über ein Gateway mit einem Drahtlosnetzwerkgerät (150) verbunden ist, wobei das Verfahren umfasst:
a. Durchführen einer ersten Produktionsaufgabe in einem Produktionsmodus, wobei die erste Produktionsaufgabe von einer Steuerung des automatisierten Führungsfahrzeugs erzeugt wird, die über das Drahtlosnetzwerk mit dem automatisierten Führungsfahrzeug verbunden ist;
b. Detektieren einer Verschlechterung in einem oder mehreren Netzwerk-KPIs, die einer Verbindung zwischen dem automatisierten Führungsfahrzeug und dem Gateway-Gerät zugeordnet sind;
c. Umschalten von dem Produktionsmodus in einen Störungsdetektionsmodus basierend auf der detektierten Verschlechterung des einen oder der mehreren Netzwerk-KPIs;
d. Erhalten eines Routenplans von einem Netzwerkmanagementgerät, wobei der Routenplan eine Vielzahl von Orten in der industriellen Anlage umfasst; Und
e. Messen des einen oder der mehreren Netzwerk-KPIs an jedem Ort in dem Routenplan durch Gehen zu jedem Ort, um Messungen des einen oder der mehreren Netzwerk-KPIs an das Netzwerkmanagementgerät zu übertragen, das dem Drahtlosnetzwerk zugeordnet ist;
wobei sich die Vielzahl von Orten des Routenplans in einem geografischen Gebiet befinden, das einem Abschnitt des Netzwerks zugeordnet ist, der eines oder mehrere Netzwerkgeräte (160, 164, 170) umfasst, und wobei die detektierte Verschlechterung durch eines oder mehrere Störsignale von der Störquelle in dem geografischen Gebiet verursacht wird.

8. Verfahren nach Anspruch 7, wobei das Messen des einen oder der mehreren Netzwerk-KPIs an jedem Ort Messen des einen oder der mehreren Netzwerk-KPIs unter Verwendung einer Funkantenne des automatisierten Führungsfahrzeugs in einer ersten Ausrichtung und Messen des einen oder der mehreren KPIs unter Verwendung der Funkantenne des automatisierten Führungsfahrzeugs in einer zweiten Ausrichtung umfasst.

9. Verfahren nach Anspruch 7, wobei das Umschalten von dem Produktionsmodus in einen Störungsdetektionsmodus Bewerten eines Grads der Verschlechterung der Verbindung zwischen dem automatisierten Führungsfahrzeug und dem Gateway-Gerät umfasst.

10. Verfahren nach Anspruch 9, wobei die detektierte Verschlechterung durch eines oder mehrere Störsignale von der Störquelle verursacht wird.

11. Netzwerkmanagementgerät (120) zur Detektion einer Störquelle (180) in einem Drahtlosnetzwerk in einer industriellen Anlage, wobei das Drahtlosnetzwerk eine Vielzahl von Netzwerkgeräten (140, 150, 154, 158, 160, 164, 170) umfasst, wobei das Netzwerkmanagementgerät (120) umfasst:
a. eine oder mehrere Netzwerkschnittstellen (710) zur Kommunikation mit einem oder mehreren Netzwerkgeräten in dem Drahtlosnetzwerk,
b. einen oder mehrere Prozessoren (720), die mit einem Speichermodul (730) verbunden sind, wobei der eine oder die mehreren Prozessoren ausgebildet sind zum:
i.Empfangen von Netzwerkqualitätsinformationen von einer Vielzahl von Netzwerkgeräten (140, 150, 154, 158, 160, 164, 170), wobei Netzwerkqualitätsinformationen von einem entsprechenden Netzwerkgerät einen oder mehrere Netzwerk-KPIs aufweisen, die die Signalqualität an dem entsprechenden Netzwerkgerät und eine Netzwerkkennung des entsprechenden Netzwerkgeräts angeben;
ii.Detektieren einer Verschlechterung in einem Abschnitt des Netzwerks basierend auf den Netzwerkqualitätsinformationen von einem oder mehreren Netzwerkgeräten (160, 164, 170) aus der Vielzahl der Netzwerkgeräten (140, 150, 154, 158, 160, 164, 170), wobei der Abschnitt des Netzwerks das eine oder die mehreren Netzwerkgeräte (160, 164, 170) umfasst;
iii.Bestimmen eines geografischen Gebiets, das dem Abschnitt des Netzwerks zugeordnet ist, basierend auf den Netzwerkqualitätsinformationen von dem einen oder den mehreren Netzwerkgeräten (160, 164, 170) in dem Abschnitt des Netzwerks;
iv.Bestimmen eines Routenplans für ein automatisiertes Führungsfahrzeug (158) basierend auf dem bestimmten geografischen Gebiet und der Netzwerktopologie des Abschnitts des Netzwerks zur Abdeckung des geografischen Gebiets, wobei das Bestimmen des Routenplans ein Bestimmen einer Vielzahl von Orten in dem geografischen Gebiet zur Abdeckung des geografischen Gebiets umfasst; und
v.Bestimmen eines Orts der Störquelle (180) basierend auf Messungen des einen oder der mehreren Netzwerk-KPIs in dem geografischen Gebiet von dem automatisierten Führungsfahrzeug (158);
wobei der Routenplan für das automatisierte Führungsfahrzeug (158) die Vielzahl von Orten in dem geografischen Gebiet umfasst, zu dem das automatisierte Führungsfahrzeug (158) fahren soll, und wobei an jedem Ort aus der Vielzahl von Orten das eine oder die mehreren Netzwerke-KPIs unter Verwendung des automatisierten Führungsfahrzeugs (158) zu messen sind.

## Revendications

1. Procédé (200) de détection d'une source (180) d'interférence dans un réseau sans fil d'une installation industrielle, dans lequel le réseau sans fil comprend une pluralité de dispositifs (140, 150, 154, 158, 160, 164, 170) de réseau, le procédé (200), effectué par un dispositif (120) de gestion de réseau, comprenant :
a. recevoir, d'une pluralité de dispositifs (140, 150, 154, 158, 160, 164, 170) de réseau, une information de qualité du réseau, dans lequel une information de qualité du réseau provenant d'un dispositif de réseau correspondant comprend une ou plusieurs KPI de réseau indiquant une qualité de signal au dispositif de réseau correspondant, et un identifiant de réseau du dispositif de réseau correspondant ;
b. détecter une dégradation dans une section du réseau sur la base de l'information de qualité du réseau provenant du un ou des plusieurs dispositifs (160, 164, 170) de réseau parmi la pluralité des dispositifs (140, 150, 154, 158, 160, 164, 170) de réseau, dans lequel la section du réseau comprend les un ou plusieurs dispositifs (160, 164, 170) de réseau ;
c. déterminer une zone géographique associée à la section du réseau sur la base de l'information de qualité du réseau provenant des un ou plusieurs dispositifs (160, 164, 170) de réseau dans la section du réseau ;
d. déterminer un plan de route à donner à un véhicule (158) automatisé de guidage sur la base de la zone géographique déterminée et d'une topologie de réseau de la section du réseau pour couvrir la zone géographique, dans lequel déterminer le plan de route comprend déterminer une pluralité d'emplacements dans la zone géographique pour couvrir la zone géographique ; et
e. déterminer (240) un emplacement de la source (180) d'interférence sur la base de mesures de la une ou des plusieurs KPI de réseau mesurées à la pluralité d'emplacements dans la zone géographique par le véhicule (158) automatisé de guidage ;
dans lequel le plan de route du véhicule (158) automatisé de guidage comprend la pluralité d'emplacements dans la zone géographique où le véhicule (158) automatisé de guidage doit aller et dans lequel, à chaque emplacement parmi la pluralité d'emplacements, la une ou les plusieurs KPI de réseau doivent être mesurées en utilisant le véhicule (158) automatisé de guidage.

2. Procédé suivant la revendication 1, dans lequel la pluralité de dispositifs (150, 154, 158, 160, 164, 168, 170, 174) de réseau comprend un ou plusieurs dispositifs de passerelle de réseau rattachés à une pluralité d'emplacements de l'installation industrielle et un ou plusieurs dispositifs utilisateurs connectés au réseau sans fil par l'intermédiaire des uns ou plusieurs dispositifs de passerelle de réseau.

3. Procédé suivant la revendication 1, dans lequel la une ou les plusieurs KPI de réseau comprennent une indication de force résiduelle du signal (RSSI), un rapport du signal à interférence plus bruit (SINR) et un taux d'erreur de paquet (PER).

4. Procédé suivant la revendication 1, dans lequel déterminer une zone géographique associée à la première section du réseau comprend
a. déterminer un emplacement d'un dispositif de réseau, à partir du un ou des plusieurs dispositifs de réseau sur la base d'un identifiant de réseau du dispositif de réseau correspondant et d'une topologie du réseau sans fil ; et
b. déterminer la zone géographique sur la base du un ou des plusieurs emplacements du un ou plusieurs dispositifs de réseau dans la première section du réseau.

5. Procédé suivant la revendication 2, dans lequel une information de qualité de réseau provenant de chaque dispositif utilisateur parmi les un ou plusieurs dispositifs utilisateurs comprend en outre une information d'emplacement indiquant un emplacement du dispositif utilisateur correspondant.

6. Procédé suivant la revendication 1, dans lequel le procédé comprend en outre coordonner avec un module (130) de radiolocalisation comprenant un ou plusieurs ensembles d'antennes (134, 138) directionnelles fixées suivant une pluralité de directions correspondantes.

7. Procédé de mesure d'une ou plusieurs KPI de réseau pour détecter une source (180) d'interférence effectué par un véhicule (158) automatisé de guidage dans une installation industrielle, dans lequel le véhicule (158) automatisé de guidage est connecté à un réseau sans fil, par l'intermédiaire d'un dispositif (150) de passerelle, le procédé comprenant :
a. effectuer une première tâche de production dans un mode de production, dans lequel la première tâche de production est créée par une unité de commande à véhicule automatisé de guidage connectée au véhicule automatisé de guidage par l'intermédiaire du réseau sans fil ;
b. détecter une dégradation de la une ou des plusieurs KPI de réseau associées à une connexion entre le véhicule automatisé de guidage et le dispositif de passerelle ;
c. passer du mode de production à un mode de détection d'interférence sur la base de la détection de la dégradation des une ou plusieurs KPI de réseau ;
d. obtenir un plan de route d'un dispositif de gestion de réseau, dans lequel le plan de route comprend une pluralité d'emplacements dans l'installation industrielle ; et
e. mesurer la une ou les plusieurs KPI de réseau à chaque emplacement du plan de route en allant à chaque emplacement, pour transmettre des mesures de la une ou des plusieurs KPI de réseau audit dispositif de gestion de réseau associé au réseau sans fil ;
dans lequel la pluralité d'emplacements du plan de route sont dans une zone géographique associée à une section du réseau comprenant un ou plusieurs dispositifs (160, 164, 170) de réseau, et dans lequel la dégradation détectée est provoquée par un ou par plusieurs signaux d'engorgement provenant de la source d'interférence dans la zone géographique.

8. Procédé suivant la revendication 7, dans lequel mesurer la une ou les plusieurs KPI du réseau à chaque emplacement comprend mesurer la une ou les plusieurs KPI du réseau en utilisant une antenne radio du véhicule automatisé de guidage dans une première orientation et mesurer la une ou les plusieurs KPI en utilisant l'antenne radio du véhicule automatisé de guidage dans une deuxième orientation.

9. Procédé suivant la revendication 7, dans lequel passer du mode de production à un mode de détection d'interférence comprend évaluer un degré de la dégradation de la connexion entre le véhicule automatisé de guidage et le dispositif de passerelle.

10. Procédé suivant la revendication 9, dans lequel la dégradation détectée est provoquée par un ou plusieurs signaux d'engorgement provenant de la source d'interférence.

11. Dispositif (120) de gestion de réseau pour détecter une source (180) d'interférence dans un réseau sans fil d'une installation industrielle, dans lequel le réseau sans fil comprend une pluralité de dispositifs (140, 150, 154, 158, 160, 164, 170) de réseau, le dispositif (120) de gestion de réseau comprenant :
a. une ou plusieurs interfaces (710) de réseau pour communiquer avec un ou plusieurs dispositifs de réseau dans le réseau sans fil,
b. un ou plusieurs processeurs (720) connecté à un module (730) de mémoire, le un ou les plusieurs processeurs étant configuré pour :
i. recevoir, d'une pluralité de dispositifs (140, 150, 154, 158, 160, 164, 170) de réseau, une information de qualité du réseau, dans lequel une information de qualité du réseau d'un dispositif de réseau correspondant comprend une ou plusieurs KPI de réseau, indiquant une qualité de signal au dispositif de réseau correspondant, et un identifiant de réseau du dispositif de réseau correspondant ;
ii. détecter une dégradation dans une section du réseau sur la base de l'information de qualité du réseau provenant du un ou des plusieurs dispositifs (160, 164, 170) de réseau parmi la pluralité des dispositifs (140, 150, 154, 158, 160, 164, 170) de réseau, dans lequel la section du réseau comprend les un ou plusieurs dispositifs (160, 164, 170) de réseau ;
iii. déterminer une zone géographique associée à la section du réseau sur la base de l'information de qualité réseau des un ou plusieurs dispositifs (160, 164, 170) de réseau dans la section du réseau ;
iv. déterminer un plan de route à donner à un véhicule (158) automatisé de guidage sur la base de la zone géographique déterminée et d'une topologie de réseau de la section du réseau pour couvrir la zone géographique, dans lequel déterminer le plan de route comprend déterminer une pluralité d'emplacements dans la zone géographique pour couvrir la zone géographique ; et
v. déterminer un emplacement de la source (180) d'interférence sur la base de mesures de la une ou des plusieurs KPI de réseau mesurées à la pluralité d'emplacements dans la zone géographique par le véhicule (158) automatisé de guidage ;
dans lequel le plan de route du véhicule (158) automatisé de guidage comprend la pluralité d'emplacements dans la zone géographique où le véhicule (158) automatisé de guidage doit aller et dans lequel, à chaque emplacement parmi la pluralité d'emplacements, la une ou les plusieurs KPI de réseau doivent être mesurées en utilisant le véhicule (158) automatisé de guidage.
